(19) Europäisches Patentamt
European Patent Office
Office européen des brevets

(11) **EP 4 000 010 B1**

(12) **EUROPÄISCHE PATENTSCHRIFT**

(45) Veröffentlichungstag und Bekanntmachung des Hinweises auf die Patenterteilung:
**31.12.2025   Patentblatt 2026/01**

(21) Anmeldenummer: **20734900.2**

(22) Anmeldetag: **24.06.2020**

(51) Internationale Patentklassifikation (IPC):
**G06N 3/096** (2023.01)          **G06N 3/0985** (2023.01)
**G06N 3/0464** (2023.01)          **G06N 3/082** (2023.01)
**G06N 3/09** (2023.01)

(52) Gemeinsame Patentklassifikation (CPC):
**G06N 3/0985; G06N 3/0464; G06N 3/082;**
**G06N 3/09; G06N 3/096; G06V 10/82;**
**G06V 20/582;** A99Z 99/00

(86) Internationale Anmeldenummer:
**PCT/EP2020/067689**

(87) Internationale Veröffentlichungsnummer:
**WO 2021/008836 (21.01.2021 Gazette 2021/03)**

(54) **VORRICHTUNG UND COMPUTERIMPLEMENTIERTES VERFAHREN FÜR DIE VERARBEITUNG DIGITALER SENSORDATEN**

DEVICE AND COMPUTER-IMPLEMENTED METHOD FOR THE PROCESSING OF DIGITAL SENSOR DATA

DISPOSITIF ET PROCÉDÉ MIS EN OEUVRE PAR ORDINATEUR POUR LE TRAITEMENT DE DONNÉES DE CAPTEUR NUMÉRIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **16.07.2019   DE 102019210507**

(43) Veröffentlichungstag der Anmeldung:
**25.05.2022   Patentblatt 2022/21**

(73) Patentinhaber: **Robert Bosch GmbH**
**70442 Stuttgart (DE)**

(72) Erfinder:
• **ELSKEN, Thomas**
  **71069 Sindelfingen (DE)**
• **HUTTER, Frank**
  **79110 Freiburg (DE)**
• **STOLL, Danny**
  **79618 Rheinfelden (DE)**
• **METZEN, Jan Hendrik**
  **71034 Boeblingen (DE)**

(56) Entgegenhaltungen:
**DE-A1- 102017 128 082**

• **HANXIAO LIU ET AL: "DARTS: Differentiable Architecture Search", ARXIV.ORG, CORNELL UNIVERSITY LIBRARY, 201 OLIN LIBRARY CORNELL UNIVERSITY ITHACA, NY 14853, 24 June 2018 (2018-06-24), XP081200634**
• **ALEX KRIZHEVSKY: "CIFAR-10 and CIFAR-100 datasets", 9 September 2020 (2020-09-09), pages 1 - 3, XP055728894, Retrieved from the Internet <URL:https://www.cs.toronto.edu/~kriz/cifar.html> [retrieved on 20200909]**
• **FERRAN ALET ET AL: "Modular meta-learning", ARXIV.ORG, CORNELL UNIVERSITY LIBRARY, 201 OLIN LIBRARY CORNELL UNIVERSITY ITHACA, NY 14853, 26 June 2018 (2018-06-26), XP080894864**
• **EFI KOKIOPOULOU ET AL: "Fast Task-Aware Architecture Inference", ARXIV.ORG, CORNELL UNIVERSITY LIBRARY, 201 OLIN LIBRARY CORNELL UNIVERSITY ITHACA, NY 14853, 15 February 2019 (2019-02-15), XP081029554**

**Beschreibung**

Stand der Technik

Die Erfindung geht aus von einer Vorrichtung und einem computerimplementierten Verfahren für die Verarbeitung digitaler Sensordaten. Die Erfindung betrifft auch ein Trainingsverfahren dafür.

HANXIAO LIU et al.: "DARTS: Differentiable Architecture Search" ARXIV.ORG, CORNELL UNIVERSITY LIBRARY, 201 OLIN LIBRARY CORNELL UNIVERSITY ITHACA, NY 14853, 24. Juni 2018 (2018-06-24), offenbart den Algorithmus DARTS, wobei DARTS für "Differentiable Architecture Search" steht.

Künstliche neuronale Netzwerke eignen sich zur Verarbeitung digitaler Sensordaten. Zum Training der künstlichen neuronalen Netzwerke sind große Mengen dieser Daten und ein hoher Zeit- und Rechenaufwand erforderlich.

Wünschenswert ist es, ein demgegenüber verbessertes Vorgehen anzugeben.

Offenbarung der Erfindung

Dies wird durch den Gegenstand der unabhängigen Ansprüche erreicht.

Ein computerimplementiertes Verfahren für die Verarbeitung digitaler Sensordaten sieht vor, dass eine Vielzahl von Trainingsaufgaben aus einer Verteilung von Trainingsaufgaben bereitgestellt wird wobei jede Trainingsaufgabe der Verteilung von Trainingsaufgaben die Verarbeitung von digitalen Sensordaten charakterisiert, wobei jede Trainingsaufgabe der Verteilung von Trainingsaufgaben eine Zuordnung der digitalen Sensordaten zu einem Ergebnis der Verarbeitung charakterisiert,

wobei ein Parametersatz für eine Architektur und für Gewichte eines künstlichen neuronalen Netzwerks in einer ersten Phase abhängig von einer Vielzahl erster Trainingsaufgaben aus den aus der Verteilung bereitgestellten Trainingsaufgaben mit einem ersten Gradienten-basierten Lern-Algorithmus und einem zweiten Gradienten-basierten Lern-Algorithmus bestimmt wird, wobei der erste Gradienten-basierte Lern-Algorithmus ein Differentiable Architecture Search Algorithmus ist, wobei der zweite Gradienten-basierte Lern-Algorithmus ein meta-learning Algorithmus ist, welcher abhängig von der Vielzahl der ersten Trainingsaufgaben und dem Parametersatz einen optimieren Parametersatz ermittelt,

wobei das künstliche neuronale Netzwerk in einer zweiten Phase abhängig vom optimierten Parametersatz und abhängig von einer zweiten, von der Vielzahl der ersten Trainingsaufgaben verschiedenen Trainingsaufgabe aus den aus der Verteilung bereitgestellten Trainingsaufgaben mit dem ersten Gradienten-basierten Lern-Algorithmus und unabhängig vom zweiten Gradienten-basierten Lern-Algorithmus trainiert wird,

wobei digitale Sensordaten mit dem künstlichen neuronalen Netzwerk verarbeitet werden. Die Trainingsaufgaben, die die digitale Sensordaten charakterisieren, können für offline Training zuvor aufgenommen, simuliert oder berechnet werden. Sowohl die Architektur als auch die Gewichte des künstlichen neuronale Netzwerks sind damit mit der wenigstens einen ersten Trainingsaufgaben in einer ersten Trainingsphase für eine konkreten Anwendung oder unabhängig von einer konkreten Anwendung trainierbar. Für die konkrete Anwendung kann damit in einer zweiten Trainingsphase ein Training mit nur einer zweiten Trainingsaufgabe durchgeführt werden. Dies verringert den Aufwand für das Training bei einer Anpassung erheblich, insbesondere wenn die zweiten Trainingsaufgaben mit den ersten Trainingsaufgaben gut korrelieren. Beispielsweise ist damit mit geringem Trainingsaufwand eine Anpassung des künstlichen neuronalen Netzwerks an einen neuen Sensor möglich, der in einem System für einen vorherigen Sensor eingesetzt wird. Dadurch wird ein Modell für Maschinenlernen das bereits für bestimmte Trainingsaufgaben optimiert wurde bereitgestellt. Insbesondere für deep neural networks besteht die Möglichkeit, ein derartiges a-priori optimiertes Modell für Maschinenlernen einfach an eine neue Trainingsaufgabe anzupassen. Schnell bedeutet hierbei, beispielsweise unter Verwendung sehr weniger neuer gekennzeichneter Trainingsdaten, in kurzer Zeit und/oder mit geringem Rechenaufwand gegenüber dem Training, das für die a-priori Optimierung nötig war.

Vorzugsweise ist das künstliche neuronale Netzwerk durch eine Vielzahl Layer definiert ist, wobei Elemente der Vielzahl der Layer einen gemeinsamen Eingang aufweisen und einen gemeinsamen Ausgang definieren, wobei die Architektur des künstlichen neuronalen Netzwerks zusätzlich zu den Gewichten für Neuronen in den Elementen durch Parameter definiert ist, wobei jeder der Parameter einen Beitrag eines der Elemente der Vielzahl Layer zum Ausgang charakterisiert. Die Elemente sind beispielsweise parallel angeordnet. Die Parameter geben durch ihre Werte beispielsweise an, welchen Beitrag ein Element, dem ein Parameter zugeordnet ist, zum Ausgang leistet. Die Ausgänge einzelner Elemente werden durch die Werte zusätzlich zu den Gewichten, die das künstliche neuronale Netzwerk für die Neuronen in den Elementen vorsieht, gewichtet.

Die erste Phase erfolgt beispielsweise mit ersten Trainingsaufgaben, die von einer generischen Anwendung stammen insbesondere offline. Die zweite Phase erfolgt beispielsweise zur Anpassung an eine konkrete Anwendung mit zweiten Trainingsaufgaben, die aus einem Betrieb einer konkreten Anwendung stammen. Die zweite Trainingsphase wird beispielsweise im Betrieb der Anwendung ausgeführt.

Bevorzugt wird das künstliche neuronale Netzwerk in einer ersten Phase abhängig von einer Mehrzahl erster Trainingsaufgaben trainiert, wobei das künstliche neuronale Netzwerk in einer zweiten Phase abhängig von einem Bruchteil der Sensordaten aus der zweiten Trainingsaufgabe, trainiert wird. Dadurch wird ein zuvor vortrainiertes künstliches neuronales Netzwerk hinsichtlich der Architektur und der Gewichte mit geringem Aufwand an eine neue Anwendung angepasst.

Vorzugsweise werden mit dem zweiten Gradienten-basierten Lern-Algorithmus wenigstens die Parameter des künstlichen neuronalen Netzwerks trainiert, die die Architektur des künstlichen neuronalen Netzwerks definieren.

Bevorzugt ist ein Verfahren zum Ansteuern einer computergesteuerten Maschine, insbesondere eines wenigstens teilautonomen Roboters, eines Fahrzeugs, einer Heimanwendung, eines angetriebenen Werkzeugs, eines persönlichen Hilfssystems, eines Zugangskontrollsystems, vorgesehen, wobei Trainingsdaten für Trainingsaufgaben abhängig von digitalen Sensordaten erzeugt werden, wobei ein künstliches neuronales Netzwerk, mittels Trainingsaufgaben gemäß dem beschriebenen Verfahren trainiert wird, wobei die computergesteuerte Maschine abhängig von einem Ausgangssignal des so trainierten künstlichen neuronalen Netzwerks angesteuert wird. Die Trainingsdaten werden für die konkrete Anwendung erfasst und insbesondere in der zweiten Trainingsphase zum Training eingesetzt. Dies erleichtert die Anpassung des künstlichen neuronalen Netzwerks und ermöglicht den sofortigen Einsatz.

Vorzugsweise umfassen die Trainingsdaten Bilddaten, Videodaten und/oder digitale Sensordaten eines Sensors, insbesondere von einer Kamera, einer Wärmebildkamera, einem LiDAR Sensor, einem Radar-Sensor einem akustischen Sensor, einem Ultraschallsensor, einem Empfänger für ein Satellitennavigationssystem, einem Drehzahlfühler, einem Drehmomentfühler, einem Beschleunigungssensor und/oder einem Lagesensor. Diese eignen sich besonders für die Automatisierung.

Eine Vorrichtung zur Verarbeitung digitaler Sensordaten insbesondere für maschinelles Lernen, Klassifikation oder Ansteuerung einer computergesteuerten Maschine umfasst einen Prozessor, und einen Speicher für wenigstens ein künstliches neuronales Netzwerk, die ausgebildet sind das Verfahren auszuführen. Diese Vorrichtung kann unabhängig von der konkreten Anwendung vorbereitet sein und anschließend abhängig von der konkreten Anwendung trainiert werden.

Weitere vorteilhafte Ausführungsformen ergeben sich aus der folgenden Beschreibung und der Zeichnung.

In der Zeichnung zeigt

Fig. 1 eine schematische Darstellung von Teilen einer Vorrichtung für die Verarbeitung digitaler Sensordaten,
Fig. 2 eine schematische Darstellung von Teilen eines künstlichen neuronalen Netzwerks,
Fig. 3 Schritte in einem computerimplementierten Verfahren für die Verarbeitung digitaler Sensordaten,
Fig. 4 Schritte in einem Verfahren zum Ansteuern einer computergesteuerten Maschine,
Fig. 5 Schritte in einem computerimplementierten Verfahren zum Trainieren.

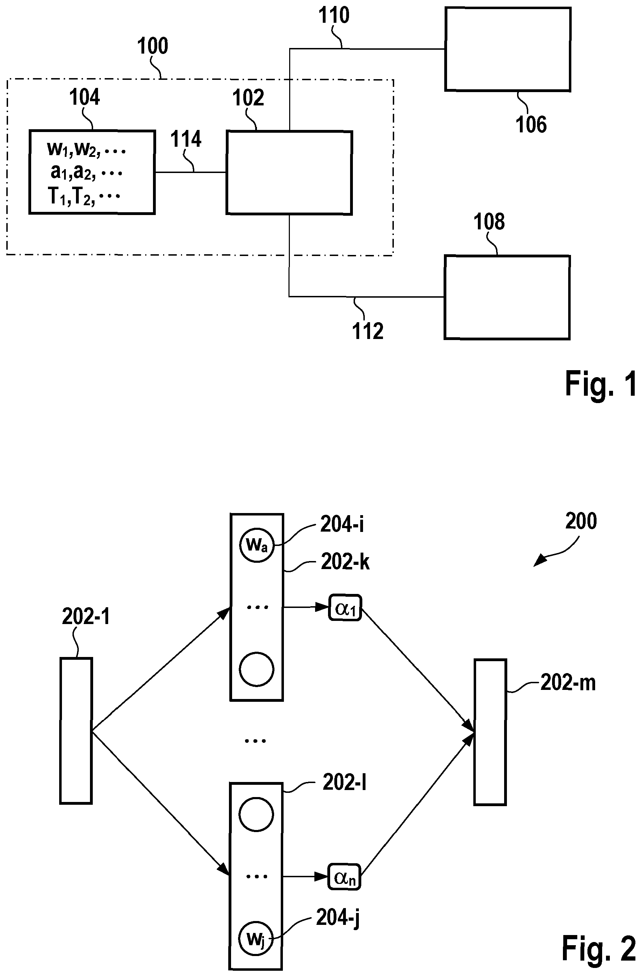

In Figur 1 ist eine Vorrichtung 100 zur Verarbeitung digitaler Sensordaten schematisch dargestellt. Die Vorrichtung 100 umfasst einen Prozessor 102, und einen Speicher 104. Zur Erfassung digitaler Sensordaten ist im Beispiel ein Sensor 106 vorgesehen. Die Vorrichtung 100 ist im Beispiel zur Ansteuerung eine computergesteuerten Maschine 108 ausgebildet. Die Vorrichtung 100 kann auch für maschinelles Lernen oder eine Klassifikation ausgebildet sein.

Der Sensor 106 ist im Beispiel über eine Signalleitung 110 mit dem Prozessor 102 verbindbar. Der Prozessor 102 ist im Beispiel ausgebildet, digitale Signale des Sensors 106 zu empfangen und in den Speicher 104 als Trainingsdaten zu speichern. Die Trainingsdaten umfassen beispielsweise Bilddaten, Videodaten und/oder andere digitale Sensordaten des Sensors 106. Die Trainingsdaten können zumindest teilweise in einem Betrieb der Vorrichtung 100 mit dem Sensor 106 erfasst werden. Trainingsdaten können auch unabhängig vom Sensor 106 erfasste oder unabhängig vom Sensor 106 bereitgestellt digitale Signale sein.

Der Sensor 106 kann insbesondere eine Kamera, eine Wärmebildkamera, ein LiDAR Sensor, ein Radar-Sensor, ein akustischer Sensor, einem Ultraschallsensor, ein Empfänger für ein Satellitennavigationssystem, ein Drehzahlfühler, ein Drehmomentfühler, ein Beschleunigungssensor und/oder ein Lagesensor sein. Es können mehrere dieser Sensoren vorgesehen sein.

Die computergesteuerte Maschine 108 ist im Beispiel über eine Signalleitung für ein Ausgangssignal 112 mit dem Prozessor 102 verbunden. Der Prozessor 102 ist im Beispiel zum Ansteuern der computergesteuerten Maschine 108 abhängig von den digitalen Signalen ausgebildet.

Die computergesteuerte Maschine 108 ist insbesondere ein wenigstens teilautonomer Roboter, ein Fahrzeug, eine Heimanwendung, ein angetriebenes Werkzeug, eine persönliches Hilfssystem, oder ein Zugangskontrollsystems.

Der Speicher 104 und der Prozessor 102 sind im Beispiel mit einer Signalleitung 114 verbunden. Diese Komponenten können in einer Server-Infrastruktur insbesondere verteilt realisiert sein. Die Vorrichtung 100 kann auch ein Steuergerät sein, das diese Komponenten integriert in einen Mikroprozessor umfasst.

Die Vorrichtung 100 ist ausgebildet die oder eines der im folgenden beschriebenen Verfahren auszuführen.

Die Vorrichtung 100 umfasst wenigstens ein künstliches neuronales Netzwerk. Ein exemplarisches künstliches neuronales Netzwerk 200 ist in Figur 2 schematisch dargestellt.

Das künstliche neuronale Netzwerk 200 ist durch eine Vielzahl Layer 202-1, ..., 202-m definiert. Im Beispiel ist ein Eingang 202-1 und ein Ausgang 202-m durch je einen der Vielzahl Layer 202-1, ..., 202-m definiert. Der Eingang 202-1 kann die Eingangsschicht des künstlichen neuronalen Netzwerks 200 oder eine verborgene Schicht des künstlichen neuronalen Netzwerks 200 sein. Der Ausgang 202-m kann eine Ausgangsschicht des künstlichen neuronalen Netzwerks 200 oder eine verborgene Schicht des künstlichen neuronalen Netzwerks 200 sein.

Bestimmte Elemente 202-k, ..., 202-l der Vielzahl der Layer 202-1, ..., 202-m weisen den Eingang 202-1 als gemeinsamen Eingang auf. Die Elemente 202-k, ..., 202-l definieren im Beispiel den Ausgang 202-m als gemeinsamen Ausgang der Elemente 202-k, ..., 202-l. Das bedeutet, die Elemente 202-k, ..., 202-l sind im künstlichen neuronalen Netzwerk 200 bezüglich ihres gemeinsamen Eingangs und bezüglich ihres gemeinsamen Ausgangs parallel angeordnet.

Das künstliche neuronalen Netzwerk 200 umfasst beispielsweise nur einen einzigen verborgenen Layer. Dieser verborgene Layer umfasst mehrere parallele Elemente. Beispielsweise ist ein erstes Element 202-k vorgesehen, das als eine 3x3 Convolution ausgebildet ist. Beispielsweise ist ein in Figur 2 nicht dargestelltes zweites Element vorgesehen, des als eine 5x5 Convolution ausgebildet ist. Beispielsweise ist ein drittes Element 202-l vorgesehen, das als MaxPooling ausgebildet ist. Diese drei Elemente sind parallel angeordnet und bilden einen Suchraum bestehend aus den drei Elementen {Conv3x3, Conv5x5, MaxPool}.

Eine mathematische Funktion, die für jedes dieser drei Elemente seinen Ausgang "output" abhängig von einem gemeinsamen Eingang "input" beschreibt, ist beispielsweise wie folgt angebbar:

$$output = Conv3x3(input),$$

$$output = Conv5x5(input),$$

$$output = MaxPool(input).$$

Eine mathematische Funktion, die einen gemeinsamen Ausgang "output" dieser drei Elemente abhängig von dem gemeinsamen Eingang "input" beschreibt, ist beispielsweise wie folgt angebbar:

$$output = \alpha_1 * Conv3x3(input) + \alpha_2 * Conv5x5(input) + \alpha_3 * MaxPool(input)$$

**Allgemeiner** ist die Architektur des künstlichen neuronalen Netzwerks 200 zusätzlich zu den Gewichten $w_a, ... , w_j$ für Neuronen 204-i, ..., 204-j in den Elementen 202-k, ..., 202-l durch Parameter $\alpha_1, ... , \alpha_n$ definiert. Jeder der Parameter $\alpha_1, ... , \alpha_n$ charakterisiert einen Beitrag eines der Elemente 202-k, ..., 202-l zum gemeinsamen Ausgang. Im Beispiel sind für n = l-k Elemente die Parameter $\alpha_1, ... , \alpha_n$ definiert. Im Beispiel bestimmt einer der die Parameter $\alpha_1, ... , \alpha_n$ in einer Multiplikation für alle Ausgänge eines einzelnen Elements dessen Beitrag zum Ausgang des Layers.

Durch entsprechende Bestimmung der Parameter $\alpha_1, ... , \alpha_n$ ist möglich, dass konkret eines der Elemente 202-k, ..., 202-l alleine das Ergebnis am Ausgang des Layers bestimmt. Im Beispiel wäre dies durch nur einen von Null verschiedenen Wert genau eines der Parameter $\alpha_1, ... , \alpha_n$ erreichbar. Von den beispielhaft beschriebenen drei Elementen {Conv3x3, Conv5x5, MaxPool} bedeutet beispielsweise $\alpha_1 = 0$, $\alpha_2 = 1$ und $\alpha_3 = 0$, dass nur der Ausgang des Conv5x5 berücksichtigt wird, d.h. eine Architektur mit dem Conv5x5 Layer. Für den Fall $\alpha_1 = 1$, $\alpha_2 = 0$ und $\alpha_3 = 0$ ergibt sich eine Architektur mit dem Conv3x3 Layer. Allgemein wird der Parameter für jedes der Elemente 202-k, ..., 202-l mit einem im Folgenden beschriebenen Vorgehen bestimmt, indem das künstliche neuronale Netzwerk 200 bestimmt wird, in dem alle Elemente 202-k, ..., 202-l parallel zueinander vorhanden sind. Jedes Element 202-k, ..., 202-l ist dabei durch einen reelwertigen Parameter $\alpha_1, ... , \alpha_n$ gewichtet.

Die Parameter $\alpha_1, ... , \alpha_n$ müssen nicht zwangsläufig 0 oder 1 sein, sondern können beliebige reelwertige Zahlen annehmen, bspw. $\alpha_1 = 0,7$, $\alpha_2 = 0,2$ und $\alpha_3 = 0,1$. Dies stellt eine Relaxation des Suchraums dar. Beispielsweise wird für die Parameter $\alpha_1, ... , \alpha_n$ eine Randbedingung so gewählt, dass eine Summe der Parameter $\alpha_1, ... , \alpha_n$ den Wert Eins ergibt. Dies ist beispielsweise durch eine Bestimmung reelwertiger Werte für die Parameter $\alpha_1, ... , \alpha_n$ und eine Normierung der Werte für die Parameter $\alpha_1, ... , \alpha_n$ mit der Summe aller Werte möglich. Diese Relaxation stellt eine Gewichtung der einzelnen Elemente 202-k, ..., 202-l in der durch alle dieser Elemente 202-k, ..., 202-l definierten Architektur des künstlichen neuronalen Netzwerks 200 dar.

Mit diesen, insbesondere reelwertigen Parametern $\alpha_1, ... , \alpha_n$, ist eine einfache Optimierung der Architektur möglich. Die Optimierung verwendet beispielsweise einen Gradienten-basierten Algorithmus. Vorzugsweise wird ein stochastic gradient descent eingesetzt. Besonders bevorzugt wird die gleiche Art von Algorithmen eingesetzt, der für die Optimierung der Gewichte $w_a, ..., w_j$ für Neuronen 204-i, ..., 204-j in den Elementen 202-k, ..., 202-l verwendet wird.

Das künstliche neuronale Netzwerk 200 in Figur 2 stellt ein Beispiel für eine derartige Anordnung paralleler Elemente 202-k, ..., 202-l dar. Allgemein kann ein künstliches neuronales Netzwerk eine beliebige Anzahl derartiger paralleler Elemente insbesondere in unterschiedlichen, aufeinanderfolgenden verborgenen Schichten aufweisen. Es kann auch vorgesehen sein, wenigstens eines der Elemente parallel zu einem anderen Element oder zu mehreren seriell angeordneten Elementen anzuordnen.

Derartige, durch die Bestimmung der Parameter $\alpha_1, ..., \alpha_n$ optimierbare Elemente des künstlichen neuronalen Netzwerks, sind Teile, die einen gemeinsamen Eingang aufweisen und einen gemeinsamen Ausgang definieren. Es können mehrere derartige Schichten vorgesehen sein, die jeweilige Ein- und Ausgänge aufweisen. Es kann insbesondre jede der verborgenen Schichten derart aufgebaut sein. Für jede dieser Schichten kann ein jeweiliger Ein- und Ausgang vorgesehen sein.

Ein computerimplementiertes Verfahren für die Verarbeitung digitaler

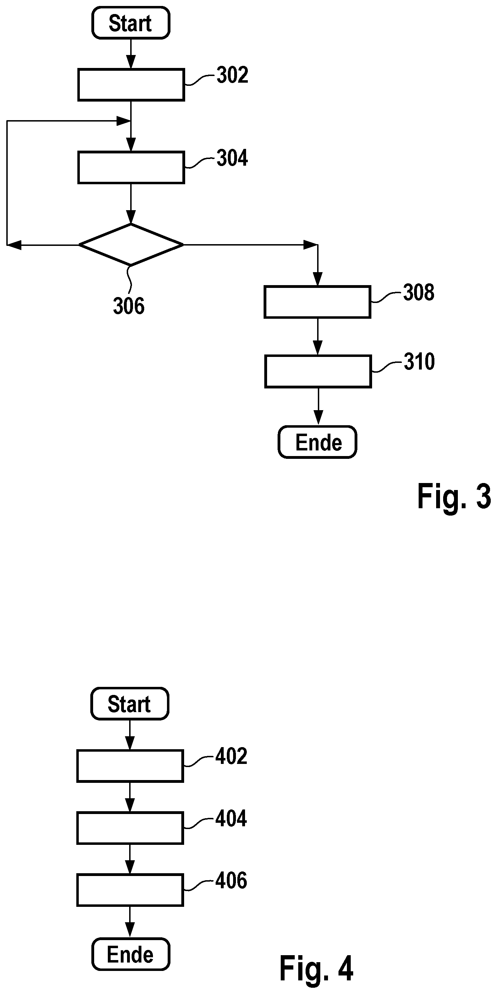

Sensordaten mit einem derartigen künstlichen neuronalen Netzwerk wird anhand der Figur 3 am Beispiel des künstlichen neuronalen Netzwerks 200 beschrieben.

In einem Schritt 302 wird eine Vielzahl von p Trainingsaufgaben $T_1, T_2, ..., T_p$ aus einer Verteilung p(T) von Trainingsaufgaben $T$ bereitgestellt.

Zudem wird im Beispiel für die drei Elemente {Conv3x3, Conv5x5, MaxPool} eine Meta-Architektur $a_{meta}$ bereitgestellt. Die Meta-Architektur $a_{meta}$ ist in diesem Beispiel initial definiert als

$$a_{meta} = (0.7, 0.2, 0.1)$$

Dies können zufällige insbesondere reellwertige Größen von Null bis Eins sein.

Im Beispiel werden auch Meta-Gewichte $w_{meta}$ initial definiert.

Die Trainingsaufgaben T charakterisieren im Beispiel die Verarbeitung von digitalen Sensordaten. Es handelt sich um Daten, die von einem Sensor erfasst wurden. Es können Bilddaten, Videodaten und/oder digitale Sensordaten des Sensors 106 zugrunde liegen. Die Trainingsaufgaben T charakterisieren eine Zuordnung der digitalen Sensordaten zu einem Ergebnis der Verarbeitung. Insbesondere kann für digitale Sensordaten von der wenigstens einen Kamera, der Wärmebildkamera, dem LiDAR Sensor, dem Radar-Sensor, dem akustischen Sensor, dem Ultraschallsensor, dem Empfänger für das Satellitennavigationssystem, dem Drehzahlfühler, dem Drehmomentfühler, dem Beschleunigungssensor und/oder dem Lagesensor eine Zuordnung zu einer Klassifikation eines Ereignisses insbesondere für zumindest teilweise autonomes Steuern der Maschine 108 als Trainingsaufgabe definiert sein. Für Maschinenlernen oder Regression können entsprechende Trainingsaufgaben definiert sein.

In einem anschließenden Schritt 304 wird wenigstens ein erster Parametersatz $W_1, A_1$ für eine Architektur und für Gewichte eines künstlichen neuronalen Netzwerks abhängig von mehr als einer ersten Trainingsaufgabe aus der Verteilung der Trainingsaufgaben T mit einem ersten Gradienten-basierten Lern-Algorithmus und einem zweiten Gradienten-basierten Lern-Algorithmus bestimmt. Der erste Parametersatz $W_1, A_1$ umfasst einen ersten Parameterwertesatz $A_1$ für die Parameter $\alpha_1, ..., \alpha_n$ und einen ersten Satz $W_1$ für die Gewichte $w_a, ..., w_j$. Der erste Satz $W_1$ für die Gewichte kann zudem Werte für alle anderen Gewichte aller anderen Neuronen des künstlichen neuronalen Netzwerks 200 oder eines Teils der Neuronen des künstlichen neuronalen Netzwerks 200 umfassen. Der aus den im Folgenden beschriebenen Gradientenabstiegsverfahren resultierende letzte Parameterwertesatz $a_i$ definiert den ersten Parameterwertesatz $A_1$. Der aus den im Folgenden beschriebenen Gradientenabstiegsverfahren resultierende letzte Satz $w_i$ mit den Gewichten definiert den ersten Satz $W_1$ für die Gewichte.

Der erste Gradienten-basierten Lern-Algorithmus umfasst für eine bestimmte Trainingsaufgabe $T_i$, einen Parameterwertesatz $a_i$ mit den Parametern $\alpha_{1,i}, ..., \alpha_{n,i}$ und einen Satz $w_i$ mit den Gewichten $w_{a,i}, ..., w_{j,i}$ beispielsweise eine Zuordnung

$$(w_i, a_i) = \phi(w_{meta}, a_{meta}, T_i)$$

Mit $a_{meta}$ wird die Meta-Architektur bezeichnet. Mit $w_{meta}$ werden die Meta-Gewichte bezeichnet.

Dabei ist $\phi$ ein Algorithmus, insbesondere ein Optimierungsalgorithmus, Trainingsalgorithmus oder Lernalgorithmus, der für eine speziellen Trainingsaufgabe sowohl die Gewichte als auch die Architektur eines neuronalen Netzes für diese Trainingsaufgabe optimiert. Beispielsweise werden mit dem Ausführen des Algorithmus $\phi$ k Schritte Gradientenabstieg ausgeführt, um die Gewichte und die Architektur zu optimieren. Für die Berechnung ist der Algorithmus $\phi$ als DARTS Algorithmus ausgebildet.

Im Beispiel wird abhängig von dieser Trainingsaufgabe $T_i$ eine optimierte Architektur $a_i$ abhängig von der initialen Meta-Architektur $a_{meta}$ und den initialen Gewichten $w_{meta}$ bestimmt als

$$a_i = (0.8, 0.0, 0.2) = (\alpha_1, \alpha_2, \alpha_3)$$

Zudem wird ein optimierter Satz $w_i$ für die Gewichte $w_{a,i}$, ..., $w_{j,i}$ bestimmt.

Der Index i signalisiert das $a_i$ aus der i-ten Trainingsaufgabe $T_i$ ermittelt wurde.

Das bedeutet, die Parameter $\alpha_{1,i}$ ... , $\alpha_{n,i}$ hängen von der i-ten Trainingsaufgabe $T_i$ ab und können je nach Trainingsaufgabe $T_i$ variieren.

Im Beispiel kann die optimierte Architektur $a_i$ abhängig von einer anderen Trainingsaufgabe $T_i$ abhängig von der initialen Meta-Architektur auch bestimmt werden als

$$a_i = (0.0, 1.0, 0.0) = (\alpha_1, \alpha_2, \alpha_3)$$

Zudem wird ein optimierter Satz $w_i$ für die Gewichte $w_{a,i}$, ... , $w_{j,i}$ bestimmt.

Abhängig von dem zweiten Gradienten-basierten Lern-Algorithmus wird wenigstens ein Parameter bestimmt, der den Beitrag wenigstens eines der Elemente zum Ausgang definiert. Im Beispiel werden die Parameter $\alpha_1$, ..., $\alpha_n$ bestimmt.

Der zweite Gradienten-basierten Lern-Algorithmus umfasst beispielsweise für die Vielzahl p Trainingsaufgaben $T_1, ... , T_p$ eine Zuordnung

$$(w_{meta}, a_{meta}) = \Psi\big(w_{meta}, w_1, ..., w_p, a_{meta}, a_1, ..., a_p, T_1, ..., T_p\big)$$

Mit $\Psi$ ist ein meta-learning Algorithmus bezeichnet. Der meta-learning Algorithmus $\Psi$ optimiert abhängig von einer Reihe Trainingsaufgaben $T_1, ... , T_p$ mit zugehörigen optimierten Architekturen $a_1$, ..., $a_p$ und zughörigen optimierten Gewichten $w_1$, ..., $w_p$ die Meta-Architektur $a_{meta}$ zusammen mit den Meta-Gewichten $w_{meta}$. Die optimierten Architekturen sind repräsentiert durch die Parameterwertesätze $a_1$, ..., $a_p$. Die optimierten Gewichte sind repräsentiert durch die Sätze $w_1, ... , w_p$ für die Gewichte.

Der Meta-Learning Algorithmus $\Psi$ ist beispielsweise der MAML Algorithmus. Der MAML bezeichnet den Algorithmus Model-Agnostic Meta-Learning for Fast Adaptation of Deep Networks, Chelsea Finn, Pieter Abbeel, Sergey Levine; Proceedings of the 34th International Conference on Machine Learning; 2017; https://arxiv.org/pdf/1703.03400. pdf. Im Gegensatz zu Meta-Learning Algorithmen, die iterativ die Gewichte eines neuronalen Netzes meta-lernen, wie beispielsweise der ursprüngliche MAML Algorithmus, in dem nur die Gewichte w eines fixierten neuronalen Netzes meta-gelernt werden, wird dadurch auch die Architektur des neuronalen Netzes 200 meta-gelernt.

Für eine reelwertige Repräsentation der Architektur des künstlichen neuronalen Netzwerks werden im Beispiel mit dem MAML Algorithmus Gradienten im Architektur-Raum auch für die Architektur-Parameter berechnet. Mit diesem Gradientenabstiegsverfahren werden sowohl die Gewichte als auch die Architektur optimiert.

Beispielsweise wird per Gradientenabstiegsverfahren die folgende Gleichung minimiert

$$\min_{w_{meta}, a_{meta}} \sum_{T} Loss(T, \phi)$$

Anschließend wird in einem Schritt 306 geprüft, ob eine erste Phase abgeschlossen ist.

Das künstlichen neuronalen Netzwerk 200 wird im Beispiel in der ersten Phase abhängig von der Vielzahl erster Trainingsaufgaben $T_1, ... , T_p$ mit dem ersten Gradienten-basierten Lernalgorithmus und dem zweiten Gradienten-basierten Lern-Algorithmus trainiert.

Der erste Parameterwertesatz $A_1$ für die Parameter $\alpha_1$, ..., $\alpha_n$ und der erste Satz $W_1$ für die Gewichte $w_a$, ..., $w_j$ definiert im Beispiel das künstliche neuronale Netzwerk 200 nach einem Training mit dem DARTS und dem MAML Algorithmus.

Die erste Phase ist beispielsweise abgeschlossen, wenn ein Stopp-Kriterium zutrifft. Das Stopp-Kriterium ist beispielsweise das Erreichen einer Zeitschwelle oder eines Ressourcenbudgets. Wenn die erste Phase abgeschlossen ist, wird ein Schritt 308 ausgeführt. Anderenfalls wird der Schritt 304 ausgeführt.

Im Schritt 308 wird das künstliche neuronale Netzwerk 200 abhängig vom ersten Parametersatz $W_1$, $A_1$ und abhängig von einer zweiten Trainingsaufgabe mit dem ersten Gradienten-basierten Lern-Algorithmus trainiert. Der aus dem Training mit dem ersten Gradienten-basierten Lern-Algorithmus resultierende letzte Parameterwertesatz $a_i$ definiert einen zweiten Parameterwertesatz $A_2$. Der aus dem Training mit dem ersten Gradienten-basierten Lern-Algorithmus resultierende letzte Satz $w_i$ mit den Gewichten definiert den einen zweiten Satz $W_2$ für die Gewichte.

Das bedeutet, das künstliche neuronale Netzwerk 200 wird abhängig von einer neuen Trainingsaufgabe und abhängig vom ersten Gradienten-basierten Lern-Algorithmus und unabhängig vom zweiten Gradienten-basierten Lern-Algorithmus trainiert. Der zweite Parameterwertesatz $A_2$ für die

Parameter $\alpha_1, ..., \alpha_n$ und der zweite Satz $W_2$ für die Gewichte $w_a, ... , w_j$ definiert im Beispiel das künstliche Neuronale Netzwerk 200 nach dem abschließenden Training nur mit dem DARTS Algorithmus.

Anschließend werden in einem Schritt 310 digitale Sensordaten vom trainierten künstlichen neuronalen Netzwerk 200 verarbeitet.

Anschließend endet das Verfahren.

In einem Aspekt wird das künstliche neuronale Netzwerk 200 in der ersten Phase abhängig von einer Mehrzahl erster Trainingsaufgaben trainiert und in der zweiten Phase abhängig von einem Bruchteil der Trainingsdaten, insbesondere aus nur einer zweiten Trainingsaufgabe.

Schritte in einem Verfahren zum Ansteuern der computergesteuerten Maschine 108 werden im Folgenden mit Verweis auf Figur 4 beschrieben.

Das Verfahren zum Ansteuern der computergesteuerten Maschine 108 startet beispielsweise, wenn diese trainiert werden soll. In einem Aspekt ist das künstliche neuronale Netzwerk 200 in der ersten Phase wie zuvor beschrieben trainiert, und in der Vorrichtung 100 für maschinelles Lernen, für beispielsweise Regression und/oder für Klassifikation implementiert. Die Vorrichtung 100 steuert die computergesteuerte Maschine 108 gemäß dem Verfahren an. Das Verfahren startet beispielweise nach dem Einschalten der computergesteuerten Maschine 108 in der dieses künstlichen neuronale Netzwerk 200 implementiert ist. Es kann auch ein Ereignis, wie beispielsweise ein Tausch des Sensors 106 oder ein Software-Update für den Sensor 106 oder für die computergesteuerte Maschine 108 den Start auslösen.

Nach dem Start werden in einem Schritt 402 Trainingsdaten für zweite Trainingsaufgaben abhängig von digitalen Sensordaten 110 erzeugt. Die Trainingsdaten können Bilddaten, Videodaten und/oder digitale Sensordaten des Sensors 106 sein. Beispielsweise werden Bilddaten von der Kamera oder der Wärmebildkamera verwendet. Die Bilddaten können auch vom LiDAR Sensor, dem Radar-Sensor, dem akustischen Sensor oder dem Ultraschallsensor stammen. Die Trainingsdaten können auch Positionen vom Empfänger für das Satellitennavigationssystem, Drehzahlen vom Drehzahlfühler, Drehmomente vom Drehmomentfühler, Beschleunigungen vom Beschleunigungssensor und/oder Lageinformation vom Lagesensor umfassen. Die Trainingsdaten korrelieren im Beispiel mit den Trainingsdaten, die in der ersten Phase für das Training des künstlichen neuronalen Netzwerks 200 verwendet werden. Die Trainingsaufgaben korrelieren ebenfalls. In einer Ausführung, welche nicht unter den Wortlaut der Ansprüche fällt, können beispielweise beim Tausch des Sensors 106 oder der ersten Inbetriebnahme der computergesteuerten Maschine 108 mit dem Sensor 106 erste Trainingsaufgaben aus der ersten

Phase verwendet werden, in denen für die erste Phase verwendete generische Sensordaten durch die tatsächlich vom Sensor 106 bestimmte Sensordaten ersetzt werden.

In einem anschließenden Schritt 404 wird das künstliche neuronale Netzwerk 200 mittels der zweiten Trainingsaufgaben trainiert. In einem Aspekt wird das künstliche neuronale Netzwerk 200 wie zuvor für die zweite Phase beschrieben trainiert. So wird die Vorrichtung 100 trainiert.

In einem anschließenden Schritt 406 wird die computergesteuerte Maschine 108 abhängig von dem Ausgangssignal 112 der so trainierten Vorrichtung 100 angesteuert.

Anschließend endet das Verfahren, beispielsweise wenn die computergesteuerte Maschine 108 abgeschaltet wird.

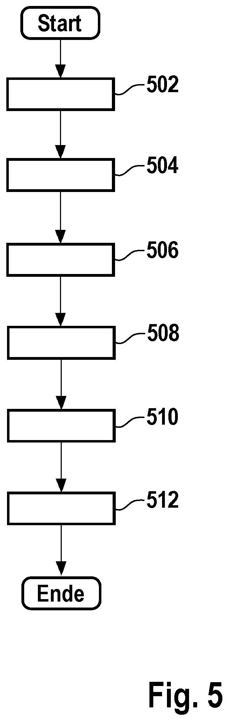

Schritte in einem computerimplementierten Verfahren zum Trainieren werden im Folgenden anhand Figur 5 beschrieben.

Nach dem Start wird ein Schritt 502 ausgeführt.

Im Schritt 502 werden Trainingsdaten für die ersten Trainingsaufgaben gemäß der ersten Phase bereitgestellt. Die Trainingsdaten werden beispielsweise in einer Datenbank bereitgestellt.

In einem anschließenden Schritt 504 werden die ersten Trainingsaufgaben für die erste Phase bestimmt. Beispielsweise wird für die Verteilung der Trainingsaufgaben p(T) für die erste Phase bestimmt und die ersten Trainingsaufgaben aus der Verteilung p(T) gesampelt. Die zweiten Trainingsaufgaben oder die zweite Trainingsaufgabe müssen zu diesem Zeitpunkt noch nicht gegeben oder bekannt sein.

Anschließend wird das künstliche neuronale Netzwerk 200 in einem Schritt 506 mittels der ersten Trainingsaufgaben gemäß der ersten Phase trainiert.

Eine beispielhafte Implementierung wird im Folgenden für die Verteilung p(T) der ersten Trainingsaufgaben wiedergegeben:

while (<some stopping criterion such as time or resource budget> ):

sample tasks $T_1, T_2, ... , T_p$ from p(T)
for all $T_i$:

$$( w_i, a_i) = \phi( w_{meta}, a_{meta}, T_i)$$

$$(w_{meta}, a_{meta}) = \Psi\big(w_{meta}, w_1, \ldots, w_p, a_{meta}, a_1, \ldots, a_p, T_1, \ldots, T_p\big)$$

return ($w_{\text{meta}}$, $a_{\text{meta}}$)
Anschließend endet das Verfahren.

In einem Schritt 508 werden Trainingsdaten für die zweiten Trainingsaufgaben oder nur für die zweite Trainingsaufgabe gemäß der zweiten Phase bereitgestellt.

Anschließend wird in einem Schritt 510 wenigstens eine zweite Trainingsaufgabe für die zweite Phase bestimmt.

Anschließend wird das künstliche neuronale Netzwerk 200 abhängig von der wenigstens einen zweiten Trainingsaufgaben gemäß der zweiten Phase trainiert. Eine beispielhafte Implementierung des Schritts 512 wird im Folgenden für eine einzelne zweite Trainingsaufgabe T wiedergegeben:

$$( w_T, a_T) = \phi( w_{meta}, a_{meta}, T)$$

return ($w_T$, $a_T$)

Die Trainingsaufgaben aus den Trainingsaufgaben-Sätzen sind unabhängig voneinander vorgebbar. Ein Ergebnis des Trainings kann abhängig von der ersten Phase der Methode sowie abhängig von nur einer neuen Trainingsaufgabe bestimmt werden. Der Schritt 510 kann bei Bedarf auf verschiedene neue Trainingsaufgaben angewendet werden, diese sind dann unabhängig voneinander.

Die beschriebenen Verfahren können eingesetzt werden, um mit dem künstlichen neuronalen Netzwerk 200 Vorhersagen insbesondere abhängig von empfangenen Sensordaten zu treffen. Es kann auch vorgesehen sein, mit dem künstlichen neuronalen Netzwerk Information über den Sensors 106 aus den empfangenen Sensordaten zu extrahieren.

In einer Ausführungsform, welche nicht unter den Wortlaut der Ansprüche fällt, können in der ersten Phase generische Trainingsdaten für Sensoren einer bestimmten Sensorklasse verwendet werden, zu der beispielsweise der Sensor 106 zählt. Beim Tausch des Sensors 106 kann somit das künstliche neuronalen Netzwerk durch Training in der zweiten Phase einfach an einen Wechsel einer Hard- oder Software Generation angepasst werden.

Eine konkrete andere Anwendung, welche nicht unter den Wortlaut der anhängigen Ansprüche fällt, stellt beispielsweise eine Verkehrszeichenerkennung dar. Beispielsweise werden in der ersten Phase länderspezifische Verkehrszeichen verwendet, die nur für wenige Länder, beispielsweise Deutschland oder Österreich vorliegen. Mit ersten Trainingsdaten, die auf diesen länderspezifischen Verkehrszeichen beruhen, wird das künstliche neuronale Netzwerk 200 in der ersten Phase trainiert. Wenn die Verkehrszeichenerkennung in anderen Ländern eingesetzt werden soll, wird das künstliche neuronale Netzwerk 200 in der zweiten Phase mit wenigen zweiten Trainingsdaten mit Verkehrszeichen trainiert, die für diese anderen Länder spezifisch sind.

**Patentansprüche**

1. Computerimplementiertes Verfahren für die Verarbeitung digitaler Sensordaten, **dadurch gekennzeichnet, dass** eine Vielzahl von Trainingsaufgaben aus einer Verteilung von Trainingsaufgaben bereitgestellt wird (302), wobei jede Trainingsaufgabe der Verteilung von Trainingsaufgaben die Verarbeitung von digitalen Sensordaten charakterisiert, wobei jede Trainingsaufgabe der Verteilung von Trainingsaufgaben eine Zuordnung der digitalen Sensordaten zu einem Ergebnis der Verarbeitung charakterisiert,

wobei ein Parametersatz für eine Architektur und für Gewichte eines künstlichen neuronalen Netzwerks (200) in einer ersten Phase abhängig von einer Vielzahl erster Trainingsaufgaben ($T_1, \ldots, T_p$) aus den aus der Verteilung bereitgestellten Trainingsaufgaben mit einem ersten Gradienten-basierten Lern-Algorithmus und einem zweiten Gradienten-basierten Lern-Algorithmus bestimmt wird (304), wobei der erste Gradienten-basierte Lern-Algorithmus ein Differentiable Architecture Search Algorithmus ($\Phi$) ist, wobei der zweite Gradienten-basierte Lern-Algorithmus ein meta-learning Algorithmus ($\Psi$) ist, welcher abhängig von der Vielzahl der ersten Trainings-aufgaben ($T_1, \ldots, T_p$) und dem Parametersatz einen optimieren Parametersatz ($w_{meta}, a_{meta}$) ermittelt, wobei das künstliche neuronale Netzwerk (200) in einer zweiten Phase abhängig vom optimierten Parametersatz ($w_{\text{meta}}$, $a_{\text{meta}}$) und abhängig von einer zweiten, von der Vielzahl der ersten Trainingsaufgaben verschiedenen Trainingsaufgabe aus den aus der Verteilung bereitgestellten Trainingsaufgaben mit dem ersten Gradienten-basierten Lern-Algorithmus und unabhängig vom zweiten Gradienten-basierten Lern-Algorithmus trainiert wird (306),
wobei digitale Sensordaten mit dem künstlichen neuronalen Netzwerk (200) verarbeitet werden, und
wobei die digitalen Sensordaten der Vielzahl der ersten Trainingsaufgaben mittels einem ersten Sensor (106) und die digitalen Sensordaten der zweiten Trainingsaufgabe mittels einem zweiten Sensor erfasst wurden, wobei der zweite Sensor entweder der erste Sensor mit ein Software-Update ist, oder der zweite Sensor stellt zu dem ersten Sensor einen Wechsel einer Hard- oder Software Generation dar.

2. Verfahren nach Anspruch 1, **dadurch gekennzeichnet, dass** das künstliche neuronale Netzwerk (200) durch eine Vielzahl Layer (202-1, ..., 202-m) definiert ist, wobei Elemente (202-k, ..., 202-l) der Vielzahl der Layer (202-1, ..., 202-m) einen gemeinsamen Eingang (202-1) aufweisen und einen gemeinsamen Ausgang (202-m) definieren, wobei die Architektur des künstlichen neuronalen Netzwerks (200) zusätzlich zu den Gewichten ($w_a, ... , w_j$) für Neuronen (204-i, ..., 204-j) in den Elementen (202-k, ..., 202-l) durch Parameter ($\alpha_1, ... , \alpha_n$) definiert ist, wobei jeder der Parameter ($\alpha_1, ... , \alpha_n$) einen Beitrag eines der Elemente (202-k, ..., 202-l) der Vielzahl Layer (202-1, ..., 202-m) zum Ausgang charakterisiert.

3. Verfahren nach Anspruch 2, **dadurch gekennzeichnet, dass** das künstliche neuronale Netzwerk (200) in der ersten Phase abhängig von einer Mehrzahl erster Trainingsaufgaben trainiert wird, wobei das künstliche neuronale Netzwerk (200) in der zweiten Phase abhängig von einem Bruchteil der Sensordaten aus der zweiten Trainingsaufgabe trainiert wird.

4. Verfahren nach Anspruch 3, **dadurch gekennzeichnet, dass** mit dem zweiten Gradienten-basierten Lern-Algorithmus wenigstens die Parameter ($\alpha_1, ... ,\alpha_n$) des künstlichen neuronalen Netzwerks (200) trainiert werden, die die Architektur des künstlichen neuronalen Netzwerks (200) definieren.

5. Verfahren nach einem der Ansprüche 1 bis 4, **dadurch gekennzeichnet, dass** die Trainingsdaten Bilddaten, Videodaten und/oder digitale Sensordaten eines Sensors (106) insbesondere von wenigstens einer Kamera, einer Wärmebildkamera, einem LiDAR Sensor, einem Radar-Sensor einem akustischen Sensor, einem Ultraschallsensor, einem Empfänger für ein Satellitennavigationssystem, einem Drehzahlfühler, einem Drehmomentfühler, einem Beschleunigungssensor und/oder einem Lagesensor umfassen.

6. Vorrichtung (100) zur Verarbeitung digitaler Sensordaten insbesondere für maschinelles Lernen, Klassifikation oder Ansteuerung einer computergesteuerten Maschine (108), **dadurch gekennzeichnet, dass** die Vorrichtung (100) einen Prozessor (102), und einen Speicher (104) für wenigstens ein künstliches neuronales Netzwerk (200) umfasst, wobei der Prozessor ausgebildet ist, das Verfahren nach einem der Ansprüche 1 bis 5 auszuführen.

7. Computerprogramm, umfassend Befehle, die bei einer Ausführung des Programms durch einen Computer diesen veranlassen, das Verfahren nach einem der Ansprüche 1 bis 5 auszuführen.

8. Computerprogrammprodukt, **gekennzeichnet durch** ein maschinenlesbares Speichermedium, auf dem das Computerprogramm nach Anspruch 7 gespeichert ist.

**Claims**

1. Computer-implemented method for processing digital sensor data, **characterized in that** a multiplicity of training tasks are provided (302) from a distribution of training tasks, wherein each training task of the distribution of training tasks characterizes the processing of digital sensor data, wherein each training task of the distribution of training tasks characterizes an assignment of the digital sensor data to a result of the processing,

   wherein a set of parameters for an architecture and for weights of an artificial neural network (200) is determined (304) in a first phase depending on a multiplicity of first training tasks ($T_1, ..., T_p$) from the training tasks provided from the distribution using a first gradient-based learning algorithm and a second gradient-based learning algorithm, wherein the first gradient-based learning algorithm is a differentiable architecture search algorithm ($\Phi$), wherein the second gradient-based learning algorithm is a meta-learning algorithm ($\Psi$) which determines an optimized set of parameters ($w_{meta}$, $a_{meta}$) depending on the multiplicity of first training tasks ($T_1, ..., T_p$) and the set of parameters,
   wherein the artificial neural network (200) is trained (306) in a second phase depending on the optimized set of parameters ($w_{meta}$, $a_{meta}$) and depending on a second training task, different from the multiplicity of first training tasks, from the training tasks provided from the distribution using the first gradient-based learning algorithm and independently of the second gradient-based learning algorithm,
wherein digital sensor data are processed using the artificial neural network (200), and
wherein the digital sensor data for the multiplicity of first training tasks were captured by means of a first sensor (106) and the digital sensor data for the second training task were captured by means of a second sensor, wherein the second sensor is either the first sensor with a software update, or the second sensor constitutes a change of a hardware or software generation in relation to the first sensor.

**2.** Method according to Claim 1, **characterized in that** the artificial neural network (200) is defined by a multiplicity of layers (202-1, ..., 202-m), wherein elements (202-k, ..., 202-l) of the multiplicity of layers (202-1, ..., 202-m) have a common input (202-1) and define a common output (202-m), wherein the architecture of the artificial neural network (200), in addition to the weights ($w_a$, ..., $w_j$) for neurons (204-i, ..., 204-j) in the elements (202-k, ..., 202-l), is defined by parameters ($\alpha_1$, ..., $\alpha_n$), wherein each of the parameters ($\alpha_1$, ..., $\alpha_n$) characterizes a contribution of one of the elements (202-k, ..., 202-l) of the multiplicity of layers (202-1, ..., 202-m) to the output.

**3.** Method according to Claim 2, **characterized in that** the artificial neural network (200) is trained in the first phase depending on a plurality of first training tasks, wherein the artificial neural network (200) is trained in the second phase depending on a fraction of the sensor data from the second training task.

**4.** Method according to Claim 3, **characterized in that** at least the parameters ($\alpha_1$, ..., $\alpha_n$) of the artificial neural network (200) which define the architecture of the artificial neural network (200) are trained using the second gradient-based learning algorithm.

**5.** Method according to one of Claims 1 to 4, **characterized in that** the training data comprise image data, video data and/or digital sensor data from a sensor (106), in particular from at least one camera, a thermal imaging camera, a LiDAR sensor, a radar sensor, an acoustic sensor, an ultrasonic sensor, a receiver for a satellite navigation system, a speed sensor, a torque sensor, an acceleration sensor and/or a position sensor.

**6.** Device (100) for processing digital sensor data, in particular for machine learning, classification or control of a computer-controlled machine (108), **characterized in that** the device (100) comprises a processor (102) and a memory (104) for at least one artificial neural network (200), wherein the processor is designed to carry out the method according to one of Claims 1 to 5.

**7.** Computer program comprising instructions that, when the program is executed by a computer, cause said computer to carry out the method according to one of Claims 1 to 5.

**8.** Computer program product, **characterized by** a computer-readable storage medium, on which the computer program according to Claim 7 is stored.

**Revendications**

**1.** Procédé mis en œuvre par ordinateur pour le traitement de données de capteur numériques, **caractérisé en ce qu'**une pluralité de tâches d'apprentissage est fournie à partir d'une distribution de tâches d'apprentissage (302), chaque tâche d'apprentissage de la distribution de tâches d'apprentissage caractérisant le traitement de données de capteur numériques, chaque tâche d'apprentissage de la distribution de tâches d'apprentissage caractérisant une affectation des données de capteur numériques à un résultat du traitement,

un ensemble de paramètres étant déterminé (304), lors d'une première phase, pour une architecture et pour des coefficients de pondération d'un réseau neuronal artificiel (200) en fonction d'une pluralité de premières tâches d'apprentissage ($T_1$, ..., $T_p$) issues de la distribution de tâches d'apprentissage fournies, au moyen d'un premier algorithme d'apprentissage à base de gradient et d'un deuxième algorithme d'apprentissage à base de gradient, le premier algorithme d'apprentissage à base de gradient étant un algorithme de recherche à architecture différentiable ($\Phi$), le deuxième algorithme d'apprentissage à base de gradient étant un méta-algorithme d'apprentissage ($\Psi$) qui détermine un ensemble de paramètres optimisé ($w_{meta}$, $a_{meta}$) en fonction de la pluralité des premières tâches d'apprentissage ($T_1$, ..., $T_p$),
le réseau neuronal artificiel (200), lors d'une deuxième phase, étant entraîné en fonction de l'ensemble de paramètres optimisé ($w_{meta}$, $a_{meta}$) et en fonction d'une deuxième tâche d'apprentissage différente de la pluralité des premières tâches d'apprentissage issues de la distribution de tâches d'apprentissage fournies, au moyen du premier algorithme d'apprentissage à base de gradient et indépendamment du deuxième algorithme d'apprentissage à base de gradient (306),

les données de capteur numériques étant traitées au moyen du réseau neuronal artificiel (200), et

les données de capteur numériques de la pluralité de premières tâches d'apprentissage ayant été acquises au moyen d'un premier capteur (106) et les données de capteur numériques de la deuxième tâche d'apprentissage ayant été acquises au moyen d'un deuxième capteur,

dans lequel soit le deuxième capteur est le premier capteur avec une mise à jour logicielle, soit le deuxième capteur représente un changement de génération matérielle ou logicielle par rapport au premier capteur.

2. Procédé selon la revendication 1, **caractérisé en ce que** le réseau neuronal artificiel (200) est défini par une pluralité de couches (202-1, ..., 202-m), les éléments (202-k, ..., 202-l) de la pluralité de couches (202-1, ..., 202-m) ayant une entrée commune (202-1) et définissant une sortie commune (202-m), l'architecture du réseau neuronal artificiel (200), en plus des coefficients de pondération ($w_a$, ..., $w_j$) destinés aux neurones (204-i, ..., 204-j), dans les éléments (202-k, ..., 202-l) étant définie par des paramètres ($\alpha_1$, ..., $\alpha_n$), chacun des paramètres ($\alpha_1$, ..., $\alpha_n$) caractérisant une contribution à la sortie de l'un des éléments (202-k, ..., 202-l) de la pluralité des couches (202-1, ..., 202-m).

3. Procédé selon la revendication 2, **caractérisé en ce que** le réseau neuronal artificiel (200) est entraîné lors de la première phase en fonction d'une multiplicité de premières tâches d'apprentissage, le réseau neuronal artificiel (200) étant entraîné lors de la deuxième phase en fonction d'une fraction des données de capteur provenant de la deuxième tâche d'apprentissage.

4. Procédé selon la revendication 3, **caractérisé en ce qu'**au moins les paramètres ($\alpha_1$, ..., $\alpha_n$) du réseau neuronal artificiel (200) qui définissent l'architecture du réseau neuronal artificiel (200) sont entraînés au moyen du deuxième algorithme d'apprentissage à base de gradient.

5. Procédé selon l'une quelconque des revendications 1 à 4, **caractérisé en ce que** les données d'apprentissage comprennent des données d'image, des données vidéo et/ou des données de capteur numériques provenant d'un capteur (106), notamment d'au moins une caméra, d'une caméra thermique, d'un capteur LIDAR, d'un capteur radar, d'un capteur acoustique, d'un capteur à ultrasons, d'un récepteur pour système de navigation par satellite, d'un capteur de vitesse, d'un capteur de couple, d'un capteur d'accélération et/ou d'un capteur de position.

6. Dispositif (100) pour le traitement de données de capteur numériques, en particulier pour l'apprentissage automatique, la classification ou l'actionnement d'une machine commandée par ordinateur (108), **caractérisé en ce que** le dispositif (100) comprend un processeur (102), et une mémoire (104) destinée à au moins un réseau neuronal artificiel (200), le processeur étant conçu pour mettre en œuvre le procédé selon l'une quelconque des revendications 1 à 5.

7. Programme informatique comprenant des instructions qui, lors de l'exécution du programme par un ordinateur, amènent ce dernier à mettre en œuvre le procédé selon l'une quelconque des revendications 1 à 5.

8. Produit de programme informatique, **caractérisé par** un support de stockage lisible par machine sur lequel est stocké le programme informatique selon la revendication 7.

110

100

104

$w_1, w_2, \cdots$
$a_1, a_2, \cdots$
$T_1, T_2, \cdots$

114

102

106

108

112

## Fig. 1

204-i

$w_a$

202-k

202-1

$\cdots$

$\alpha_1$

202-m

$\cdots$

202-l

$\cdots$

$\alpha_n$

204-j

$w_j$

200

## Fig. 2

Fig. 3

Fig. 4

Fig. 5

**EP 4 000 010 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- DARTS: Differentiable Architecture Search. **HAN-XIAO LIU et al.** ARXIV.ORG. CORNELL UNIVERSITY LIBRARY, 24 June 2018

- **CHELSEA FINN** ; **PIETER ABBEEL** ; **SERGEY LEVINE**. *Proceedings of the 34th International Conference on Machine Learning*, 2017, https://arxiv.org/pdf/1703.03400.pdf